(19) Europäisches Patentamt
European Patent Office
Office européen des brevets

(11) EP 4 700 865 A1

(12) EUROPEAN PATENT APPLICATION

(43) Date of publication:
**25.02.2026 Bulletin 2026/09**

(21) Application number: **25188047.2**

(22) Date of filing: **08.07.2025**

(51) International Patent Classification (IPC):
***H01M 4/52*** *(2010.01)* ***H01M 10/052*** *(2010.01)*
***H01M 10/0525*** *(2010.01)* ***H01M 10/0567*** *(2010.01)*
***H01M 10/0568*** *(2010.01)* ***H01M 10/0569*** *(2010.01)*

(52) Cooperative Patent Classification (CPC):
**H01M 10/0567; H01M 10/052; H01M 10/0568; H01M 10/0569;** H01M 2300/004

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **23.08.2024 KR 20240113637**

(71) Applicant: **SAMSUNG SDI CO., LTD.**
**Yongin-si, Gyeonggi-do 17084 (KR)**

(72) Inventors:
- **Park, Sangwoo**
  **Yongin-si, Gyeonggi-do 17084 (KR)**
- **Choi, Hyunbong**
  **Yongin-si, Gyeonggi-do 17084 (KR)**
- **Jun, Dasol**
  **Yongin-si, Gyeonggi-do 17084 (KR)**
- **Park, Hongryeol**
  **Yongin-si, Gyeonggi-do 17084 (KR)**
- **Yang, Yeji**
  **Yongin-si, Gyeonggi-do 17084 (KR)**
- **Tsay, Olga**
  **Yongin-si, Gyeonggi-do 17084 (KR)**
- **Shin, Youngkyeong**
  **Yongin-si, Gyeonggi-do 17084 (KR)**
- **Kim, Sohee**
  **Yongin-si, Gyeonggi-do 17084 (KR)**
- **Kim, Sanghoon**
  **Yongin-si, Gyeonggi-do 17084 (KR)**
- **Ji, Woojung**
  **Yongin-si, Gyeonggi-do 17084 (KR)**
- **Lim, Seiyeon**
  **Yongin-si, Gyeonggi-do 17084 (KR)**

(74) Representative: **Gulde & Partner**
**Patent- und Rechtsanwaltskanzlei mbB**
**Berliner Freiheit 2**
**10785 Berlin (DE)**

# (54) ELECTROLYTE FOR RECHARGEABLE LITHIUM BATTERY AND RECHARGEABLE LITHIUM BATTERY INCLUDING THE SAME

(57) Electrolytes and rechargeable lithium batteries are provided. The electrolytes comprise a non-aqueous organic solvent, a lithium salt, and an additive. The additive comprises a first compound represented by Chemical Formula 1, and a borate-based lithium salt compound. A detailed description of Chemical Formula 1 is as disclosed in the specification.

EP 4 700 865 A1

## Description

## BACKGROUND

### 1. Field

The present disclosure relates to an electrolyte for a rechargeable lithium battery and a rechargeable lithium battery including the same.

### 2. Background

Recently, with the rapid proliferation of battery-using electronic and/or electric devices, such as mobile phones, laptop computers, electric vehicles, and/or the like, there has been significant increase in the demand for batteries, e.g., rechargeable batteries, with relatively high energy density and high capacity. Consequently, extensive research has been conducted to enhance the performance of such rechargeable batteries, e.g., rechargeable lithium batteries.

A rechargeable lithium battery includes a positive electrode, a negative electrode, and an electrolyte. Both the positive and negative electrodes (e.g., each) include an active material in which intercalation and deintercalation (e.g. of lithium ions) are possible, (i.e., the active material is cable of intercalating and deintercalating lithium ions). For example, the rechargeable lithium battery generates electrical energy caused by oxidation and reduction reactions if lithium ions are intercalated and deintercalated.

## SUMMARY

The invention is defined by the appended claims. The description that follows is subjected to this limitation. Any disclosure lying outside the scope of said claims is only intended for illustrative as well as comparative purposes.

One or more aspects of the present disclosure are directed toward an electrolyte for a rechargeable lithium battery with excellent or suitable suppression of gas generation and resistance increase at high-temperature storage (e.g., effective suppression of gas generation and resistance increase during high-temperature storage).

One or more aspects of the present disclosure are directed toward an electrolyte for a rechargeable lithium battery with enhanced (e.g., improved) cycle-life characteristics.

One or more aspects of the present disclosure are directed toward a rechargeable lithium battery including the electrolyte discussed herein.

Additional aspects will be set forth in part in the description which follows and, in part, will be apparent from the description, or may be learned by practice of the presented embodiments of the disclosure.

According to one or more embodiments of the present disclosure, an electrolyte for a rechargeable lithium battery includes: a non-aqueous organic solvent; a lithium salt; and an additive.

The additive includes: a first compound represented by Chemical Formula 1; and a borate-based lithium salt compound.

**Chemical Formula 1**

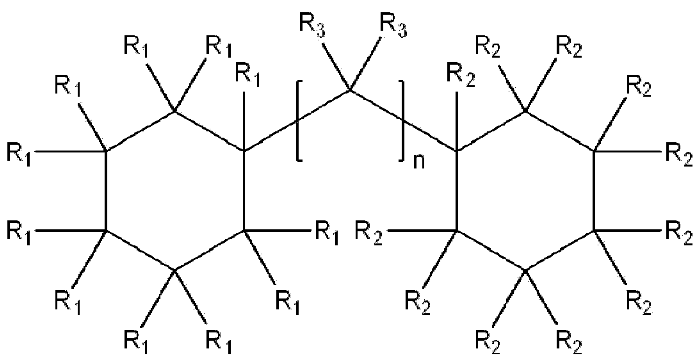

In Chemical Formula 1,

$R_1$ are each identical or different and are each independently hydrogen, halogen, a C1 to C10 alkyl group, or an isocyanate group, wherein at least one $R_1$ is an isocyanate group,

$R_2$ are each identical or different and are each independently hydrogen, halogen, a C1 to C10 alkyl group, or an isocyanate group, wherein at least one $R_2$ is an isocyanate group,
$R_3$ are each identical or different and are each independently hydrogen or a cyclohexyl isocyanate residue, and
n is an integer of 1 to 10.

According to one or more embodiments of the present disclosure, a rechargeable lithium battery includes: a positive electrode that includes a positive electrode active material; a negative electrode that includes a negative electrode active material; and the aforementioned electrolyte for the rechargeable lithium battery.

## BRIEF DESCRIPTION OF DRAWINGS

FIG. 1 illustrates a simplified conceptual diagram showing a rechargeable lithium battery according to one or more embodiments of the present disclosure.
FIGS. 2-5 illustrate diagrams each showing a rechargeable lithium battery according to one or more embodiments of the present disclosure.

## DETAILED DESCRIPTION

In order to sufficiently understand the configuration and effect of the present disclosure, one or more embodiments of the present disclosure will be described with reference to the accompanying drawings. It should be noted, however, that the present disclosure is not limited to the following example embodiments, and may be implemented in one or more suitable forms. Rather, the example embodiments are provided only to disclose the present disclosure and let those skilled in the art fully know the scope of the present disclosure.
In this description, it will be understood that, if an element is referred to as being on another element, the element can be directly on the other element or intervening elements may be present between therebetween. In the drawings, thicknesses of some components are exaggerated for effectively explaining the technical contents. Like reference numerals refer to like elements throughout, and duplicative descriptions thereof may not be provided the specification.
Unless otherwise specially noted in this description, an expression in singular form may include the expression of plural form. The terms "comprise/include," "comprises/includes," "comprising/including," "have," "having," and/or "has," as used in this description, are intended to designate the presence of an embodied aspect, number, step (e.g., act or task), element, and/or a (e.g., any suitable) combination thereof. However, the use of these terms does not preclude or exclude the possibility, presence, and/or addition of one or more other components, features, numbers, steps (e.g., acts or tasks), elements, and/or a (e.g., any suitable) combination thereof. Additionally, the terms "comprise(s)/comprising," "include(s)/including," "have/has/having", or other similar terms include or support the terms "consisting of" and "consisting essentially of," indicating the presence of stated features, integers, steps, operations, elements, and/or components, without or essentially without the presence of other features, integers, steps, operations, elements, components, and/or groups thereof. Moreover, in this context, "consisting essentially of" indicates that any additional components will not materially affect the chemical, physical, optical or electrical properties of the semiconductor film.
In this description, the term "combination thereof" may refer to a mixture, a stack, a composite, a copolymer, an alloy, a blend, or a reaction product.
In one or more embodiments, the term "layer" herein includes not only a shape formed or provided on the whole surface if viewed from a plan view, but also a shape formed or provided on a partial surface.
It will be understood that, although the terms "first," "second," "third," and/or the like may be utilized herein to describe one or more suitable elements, components, regions, layers and/or sections, these elements, components, regions, layers and/or sections should not be limited by these terms. These terms are only utilized to distinguish one element, component, region, layer or section from another element, component, region, layer, or section. Thus, a first element, component, region, layer, or section described herein may be termed a second element, component, region, layer or section without departing from the teachings set forth herein.
As utilized herein, the term "and/or" includes any, and all, combinations of one or more of the associated listed items. Expressions such as "at least one of," "one of," and "selected from," if preceding a list of elements, modify the entire list of elements and do not modify the individual elements of the list. For example, the expressions "at least one of a to c," "at least one of a, b or c," and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.
Spatially relative terms, such as "beneath," "below," "lower," "above," "upper" and/or the like, may be utilized herein to easily describe the relationship between one element or feature and another element or feature. It will be understood that the spatially relative terms are intended to encompass different orientations of a device in utilization or

operation in addition to the orientation illustrated in the drawings. For example, if the device in the drawings is turned over, elements described as "below" or "beneath" other elements or features will be oriented "above" the other elements or features. Thus, the example term "below" can encompass both (e.g., simultaneously) the orientations of above and below. The device may be otherwise oriented (rotated 90 degrees or at other orientations), and the spatially relative terms utilized herein may be interpreted accordingly.

The terminology utilized herein is utilized for the purpose of describing particular embodiments only, and is not intended to limit the present disclosure. Unless otherwise defined, all terms (including chemical, technical and scientific terms) utilized herein have the same meaning as commonly understood by one of ordinary skill in the art to which this disclosure pertains. It will be further understood that terms, such as those defined in commonly utilized dictionaries, should be interpreted as having a meaning that is consistent with their meaning in the context of the related art and the present disclosure, and will not be interpreted in an idealized or overly formal sense.

Example embodiments are described herein with reference to crosssectional views, which are schematic views of idealized embodiments. As such, variations from the shapes of the illustrations as a result, for example, of manufacturing techniques and/or tolerances, are to be expected. Thus, embodiments described herein should not be construed as being limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the drawings are schematic in nature and their shapes are not intended to illustrate the precise shape of a region and are not intended to limit the scope of the present claims.

The term "may" will be understood to refer to "one or more embodiments of the present disclosure," some of which include the described element and some of which exclude that element and/or include an alternate element. Similarly, alternative language such as "or" refers to "one or more embodiments of the present disclosure," each including a corresponding listed item.

In the context of the present application and unless otherwise defined, the terms "use," "using," and "used" may be considered synonymous with the terms "utilize," or "utilization," "utilizing," and "utilized," respectively.

The term "particle diameter" as utilized herein refers to an average diameter of particles if the particles are spherical, and refers to an average major axis length of particles if the particles are non-spherical. For example, unless otherwise especially defined in this description, a particle diameter may be an average particle diameter. For example, a particle diameter indicates an average particle diameter ($D_{50}$) where a cumulative volume is 50 volume % in a particle size distribution. The average particle diameter ($D_{50}$) may be measured by a method widely suitable to those skilled in the art, for example, by a particle size analyzer, a transmission electron microscope (TEM) image, or a scanning electron microscope (SEM) image. In one or more embodiments, a dynamic light-scattering measurement device may be used to perform a data analysis, the number of particles is counted for each particle size range, and then from this, an average particle diameter ($D_{50}$) value may be obtained through a calculation. Unless otherwise defined, the average particle diameter may refer to the diameter ($D_{50}$) of particles having a cumulative volume of 50 volume% in the particle size distribution. Dissimilarly, a laser scattering method may be utilized to measure the average particle diameter ($D_{50}$). In the laser scattering method, a target particle is distributed in a dispersion solvent, introduced into a laser scattering particle measurement device (e.g., MT3000 commercially available from Microtrac, Inc), irradiated with ultrasonic waves of 28 kHz at a power of 60 W, and then an average particle diameter ($D_{50}$) is calculated in the 50% standard of particle diameter distribution in the measurement device. As used herein, if a definition is not otherwise provided, the average particle diameter refers to a diameter ($D_{50}$) of particles having a cumulative volume of 50 volume% in the particle size distribution that is obtained by measuring the size (diameter or major axis length) of about 20 particles at random in a scanning electron microscope image.

In this description, unless otherwise separately defined, the term "substituted" may refer to that at least one hydrogen of a substituent or a compound is substituted by deuterium, a halogen group, a hydroxyl group, an amino group, a C1 to C30 amine group, a nitro group, a C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, C1 to C20 alkoxy group, a C1 to C10 fluoroalkyl group, a cyano group, and/or a (e.g., any suitable) combination thereof.

In more detail, the term "substituted" may refer to that at least one hydrogen of a substituent or a compound is substituted by deuterium, a halogen group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C10 fluoroalkyl group, or a cyano group. For example, the term "substituted" may refer to that at least one hydrogen of a substituent or a compound is substituted by deuterium, a halogen group, a C1 to C20 alkyl group, a C6 to C30 aryl group, a C1 to C10 fluoroalkyl group, or a cyano group. In one or more embodiments, the term "substituted" may refer to that at least one hydrogen of a substituent or a compound is substituted by deuterium, a halogen group, a C1 to C5 alkyl group, a C6 to C18 aryl group, a C1 to C5 fluoroalkyl group, or a cyano group. For example, the term "substituted" may refer to that at least one hydrogen of a substituent or a compound is substituted by deuterium, a cyano group, a halogen group, a methyl

group, an ethyl group, a propyl group, a butyl group, a phenyl group, a biphenyl group, a terphenyl group, a trifluomethyl group, or a naphthyl group.

**Description of FIG. 1**

FIG. 1 illustrates a simplified conceptual diagram showing a rechargeable lithium battery according to one or more embodiments of the present disclosure. Referring to FIG. 1, a rechargeable lithium battery may include a positive electrode 10, a negative electrode 20, a separator 30, and an electrolyte ELL.

The positive electrode 10 and the negative electrode 20 may be spaced and/or apart (e.g., spaced apart or separated) from each other across the separator 30. The separator 30 may be arranged between the positive electrode 10 and the negative electrode 20. The positive electrode 10, the negative electrode 20, and the separator 30 may be in contact with the electrolyte ELL. The positive electrode 10, the negative electrode 20, and the separator 30 may be impregnated in the electrolyte ELL.

The electrolyte ELL may be a medium by which lithium ions are transferred between the positive electrode 10 and the negative electrode 20. In the electrolyte ELL, the lithium ions may move through the separator 30 toward one of the positive electrode 10 and the negative electrode 20.

**Positive Electrode 10**

The positive electrode 10 for a rechargeable lithium battery may include a current collector COL1 and a positive electrode active material layer AML1 formed on the current collector COL1. The positive electrode active material layer AML1 may include a positive electrode active material and further include a binder and/or a conductive material (e.g., electron conductor).

For example, the positive electrode 10 may further include an additive that can serve as a sacrificial positive electrode.

An amount of the positive electrode active material may be 90 wt% to 99.5 wt% relative to 100 wt% of the positive electrode active material layer AML1. An amount of each of the binder and the conductive material may be 0.5 wt% to 5 wt% relative to 100 wt% of the positive electrode active material layer AML1.

The binder may serve to improve attachment of positive electrode active material particles to each other and also to improve attachment of the positive electrode active material to the current collector COL1. The binder may include, for example, polyvinyl alcohol, carboxymethyl cellulose, hydroxypropyl cellulose, diacetyl cellulose, polyvinylchloride, carboxylated polyvinylchloride, polyvinylfluoride, ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, and/or nylon, but the present disclosure is not limited thereto.

The conductive material may be used to provide an electrode with conductivity, and any suitable conductive material that does not cause a chemical change in a battery may be used as the conductive material. The conductive material may include, for example, a carbon-based material such as natural graphite, artificial graphite, carbon black, acetylene black, Ketjen black, carbon fiber, carbon nano-fiber, and/or carbon nano-tube; a metal powder or metal fiber containing at least one of (e.g., selected from among) copper, nickel, aluminum, and silver; a conductive polymer such as a polyphenylene derivative; and/or a (e.g., any suitable) mixture thereof.

Aluminum (Al) may be used as the current collector COL1, but the present disclosure is not limited thereto.

**Positive Electrode Active Material**

The positive electrode active material in the positive electrode active material layer AML1 may include a compound (e.g., lithiated intercalation compound) that can reversibly intercalate and deintercalate lithium. For example, the positive electrode active material may include at least one kind of composite oxide including lithium and metal that is selected from among cobalt, manganese, nickel, and/or a (e.g., any suitable) combination thereof.

The composite oxide may include lithium transition metal composite oxide, for example, lithium-nickel-based oxide, lithium-cobalt-based oxide, lithium-manganese-based oxide, lithium-iron-phosphate-based compounds, cobalt-free nickel-manganese-based oxide, and/or a (e.g., any suitable) combination thereof.

For example, the positive electrode active material may include a compound expressed by one of (e.g., selected from among) the following chemical formulae. $Li_aA_{1-b}X_bO_{2-c}D_o$ (where $0.90 \leq a \leq 1.8$, $0 \leq b \leq 0.5$, and $0 \leq c \leq 0.05$); $Li_aMn_{2-b}X_bO_{4-c}D_c$ (where $0.90 \leq a \leq 1.8$, $0 \leq b \leq 0.5$, and $0 \leq c \leq 0.05$); $Li_aNi_{1-b-c}Co_bX_cO_{2-\alpha}D_\alpha$ (where $0.90 \leq a \leq 1.8$, $0 \leq b \leq 0.5$, $0 \leq c \leq 0.5$, and $0 < \alpha < 2$); $Li_aNi_{1-b-c}Mn_bX_cO_{2-\alpha}D_\alpha$ (where $0.90 \leq a \leq 1.8$, $0 \leq b \leq 0.5$, $0 \leq c \leq 0.5$, and $0 < \alpha < 2$); $Li_aNi_bCo_cL^1_dG_eO_2$ (where $0.90 \leq a \leq 1.8$, $0 \leq b \leq 0.9$, $0 \leq c \leq 0.5$, $0 \leq d \leq 0.5$, and $0 \leq e \leq 0.1$); $Li_aNiG_bO_2$ (where $0.90 \leq a \leq 1.8$ and $0.001 \leq b \leq 0.1$); $Li_aCoG_bO_2$ (where $0.90 \leq a \leq 1.8$ and $0.001 \leq b \leq 0.1$); $Li_aMn_{1-b}G_bO_2$ (where $0.90 \leq a \leq 1.8$ and $0.001 \leq b \leq 0.1$); $Li_aMn_2G_bO_4$ (where

$0.90 \leq a \leq 1.8$ and $0.001 \leq b \leq 0.1$); $Li_aMn_{1-g}G_gPO_4$ (where $0.90 \leq a \leq 1.8$ and $0 \leq g \leq 0.5$); $Li_{(3-f)}Fe_2(PO_4)_3$ (where $0 \leq f \leq 2$); and $Li_aFePO_4$ (where $0.90 \leq a \leq 1.8$).

In the chemical formulae herein, A may be Ni, Co, Mn, and/or a (e.g., any suitable) combination thereof, X may be Al, Ni, Co, Mn, Cr, Fe, Mg, Sr, V, a rare-earth element, and/or a (e.g., any suitable) combination thereof, D may be O, F, S, P, and/or a (e.g., any suitable) combination thereof, G may be Al, Cr, Mn, Fe, Mg, La, Ce, Sr, V, and/or a (e.g., any suitable) combination thereof, and $L^1$ may be Mn, Al, and/or a (e.g., any suitable) combination thereof.

For example, the positive electrode active material may be a high-nickel-based positive electrode active material having a nickel amount of equal to or greater than 80 mol%, equal to or greater than 85 mol%, equal to or greater than 90 mol%, equal to or greater than 91 mol%, or equal to or greater than 94 mol% and equal to or less than 99 mol% relative to 100 mol% of metal devoid of lithium in the lithium transition metal composite oxide. The high-nickel-based positive electrode active material may achieve high capacity and thus may be applied to a high-capacity and high-density rechargeable lithium battery.

### Negative Electrode 20

The negative electrode 20 for a rechargeable lithium battery may include a current collector COL2 and a negative electrode active material layer AML2 positioned on the current collector COL2. The negative electrode active material layer AML2 may include a negative electrode active material and may further include a binder and/or a conductive material (e.g., electron conductor).

For example, the negative electrode active material layer AML2 may include a negative electrode active material of 90 wt% to 99 wt%, a binder of 0.5 wt% to 5 wt%, and a conductive material of 0 wt% to 5 wt%.

The binder may serve to improve attachment of negative electrode active material particles to each other and also to improve attachment of the negative electrode active material to the current collector COL2. The binder may include a non-aqueous binder, an aqueous binder, a dry binder, and/or a (e.g., any suitable) combination thereof.

The non-aqueous binder may include polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamide imide, polyimide, and/or a (e.g., any suitable) combination thereof.

The aqueous binder may include styrene-butadiene rubber, (meth)acrylated styrene-butadiene rubber, (meth) acrylonitrile-butadiene rubber, (meth)acrylic rubber, butyl rubber, fluoro elastomer, polyethylene oxide, polyvinyl pyrrolidone, polyepichlorohydrin, polyphosphazene, poly(meth)acrylonitrile, ethylene propylene diene copolymer, polyvinyl pyridine, chlorosulfonated polyethylene, latex, polyester resin, (meth)acrylic resin, phenolic resin, epoxy resin, polyvinyl alcohol, and/or a (e.g., any suitable) combination thereof.

If an aqueous binder is used as the negative electrode binder, a cellulose-based compound capable of providing viscosity may further be included. The cellulose-based compound may include one or more of carboxymethyl cellulose, hydroxypropylmethyl cellulose, methyl cellulose, and alkali metal salts thereof. The alkali metal may include Na, K, and/or Li.

The dry binder may include a fibrillizable polymer material, for example, polytetrafluoroethylene, polyvinylidene fluoride, polyvinylidene fluoridehexafluoropropylene copolymer, polyethylene oxide, and/or a (e.g., any suitable) combination thereof.

The conductive material may be used to provide an electrode with conductivity, and any suitable conductive material that does not cause a chemical change in a battery may be used as the conductive material. For example, the conductive material may include a carbon-based material such as natural graphite, artificial graphite, carbon black, acetylene black, Ketjen black, carbon fiber, carbon nano-fiber, and/or carbon nano-tube; a metal powder or metal fiber including at least one of (e.g., selected from among) copper, nickel, aluminum, and silver; a conductive polymer such as a polyphenylene derivative; and/or a (e.g., any suitable) mixture thereof.

The current collector COL2 may include a copper foil, a nickel foil, a stainless-steel foil, a titanium foil, a nickel foam, a copper foam, a polymer substrate coated with a conductive metal, and/or a (e.g., any suitable) combination thereof.

### Negative Electrode Active Material

The negative electrode active material in the negative electrode active material layer AML2 may include a material that can reversibly intercalate and deintercalate lithium ions, lithium metal, a lithium metal alloy, a material that can dope and de-dope lithium, and/or a transition metal oxide.

The material that can reversibly intercalate and deintercalate lithium ions may include a carbon-based negative electrode active material, for example, crystalline carbon, amorphous carbon, and/or a (e.g., any suitable) combination thereof. For example, the crystalline carbon may include graphite such as nonshaped, sheet-shaped, flake-shaped, sphere-shaped, and/or fiber-shaped natural and/or artificial graphite, and the amorphous carbon may include soft carbon,

hard carbon, mesophase pitch carbon, and/or calcined coke.

The lithium metal alloy may include an alloy of lithium and at least one metal that is selected from among Na, K, Rb, Cs, Fr, Be, Mg, Ca, Sr, Si, Sb, Pb, In, Zn, Ba, Ra, Ge, Al, and Sn.

The material that can dope and de-dope lithium may include a Si-based negative electrode active material or a Sn-based negative electrode active material. The Si-based negative electrode active material may include silicon, silicon-carbon composite, $SiO_x$ (where $0<x\leq 2$), Si-Q alloy (where Q is alkali metal, alkaline earth metal, Group 13 element, Group 14 element (except for Si), Group 15 element, Group 16 element, transition metal, a rare-earth element, and/or a (e.g., any suitable)combination thereof), and/or a (e.g., any suitable) combination thereof. The Sn-based negative electrode active material may include Sn, $SnO_2$, $SiO_y$ (where $0<y\leq 2$), a Sn-based alloy, a combination thereof.

The silicon-carbon composite may be a composite of silicon and amorphous carbon. According to one or more embodiments, the silicon-carbon composite may have a structure in which the amorphous carbon is coated on a surface of the silicon particle. For example, the silicon-carbon composite may include a secondary particle (core) in which primary silicon particles are assembled, and an amorphous carbon coating layer (shell) positioned on a surface of the secondary particle. The amorphous carbon may also be positioned between the primary silicon particles, and for example, the primary silicon particles may be coated with the amorphous carbon. The secondary particles may be present dispersed in an amorphous carbon matrix.

The silicon-carbon composite may further include crystalline carbon. For example, the silicon-carbon composite may include a core including crystalline carbon and silicon particles and may also include an amorphous carbon coating layer positioned on a surface of the core.

The Si-based negative electrode active material or the Sn-based negative electrode active material may be used in combination with a carbon-based negative electrode active material.

## Separator 30

Based on a type (kind) of the rechargeable lithium battery, the separator 30 may be present between positive electrode 10 and the negative electrode 20. The separator 30 may include at least one (e.g., or more) of (e.g., selected from among) polyethylene, polypropylene, and polyvinylidene fluoride, and may have a multilayered separator thereof such as a polyethylene/polypropylene bi-layered separator, a polyethylene/polypropylene/polyethylene tri-layered separator, and/or a polypropylene/polyethylene/polypropylene tri-layered separator.

The separator 30 may include a porous substrate and a coating layer positioned on a surface or side (e.g., one surface or (e.g., both) opposite surfaces) of the porous substrate, which coating layer may include an organic material, an inorganic material, and/or a (e.g., any suitable) combination thereof.

The porous substrate may be a polymer layer including at least one selected from among a polyolefin such as polyethylene and/or polypropylene, polyester such as polyethylene terephthalate and/or polybutylene terephthalate, polyacetal, polyamide, polyimide, polycarbonate, polyetherketone, polyaryletherketone, polyetherimide, polyamideimide, polybenzimidazole, polyethersulfone, polyphenyleneoxide, cyclic olefin copolymer, polyphenylenesulphide, polyethylene naphthalate, glass fiber, and/or Teflon (e.g., , polytetrafluoroethylene), and/or may be a copolymer or mixture including two or more of the materials mentioned herein.

The organic material may include a polyvinylidenefluoride-based copolymer and/or a (meth)acrylic copolymer.

The inorganic material may include an inorganic particle selected from among $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, Boehmite, and/or a (e.g., any suitable) combination thereof, but the present disclosure is not limited thereto.

The organic material and the inorganic material may be present mixed in one coating layer or may be present as a stack of a coating layer including the organic material and a coating layer including an inorganic material.

## Electrolyte ELL

The electrolyte ELL for a rechargeable lithium battery may include a non-aqueous organic solvent and a lithium salt.

The non-aqueous organic solvent may serve as a medium for transmitting ions that participate in an electrochemical reaction of the battery.

The non-aqueous organic solvent may include a carbonate-based solvent, an ester-based solvent, an ether-based solvent, a ketone-based solvent, an alcoholbased solvent, an aprotic solvent, and/or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), and/or butylene carbonate (BC).

The ester-based solvent may include methyl acetate, ethyl acetate, n-propyl acetate, dimethyl acetate, methyl

propionate, ethyl propionate, decanolide, mevalonolactone, valerolactone, and/or caprolactone.

The ether-based solvent may include dibutyl ether, tetraglyme, diglyme, dimethoxyethane, 2-methyltetrahydrofuran, 2.5-dimethyltetrahydrofuran, and/or tetrahydrofuran. The ketone-based solvent may include cyclohexanone. The alcoholbased solvent may include ethyl alcohol and/or isopropyl alcohol, and the aprotic solvent may include nitriles such as R-CN (where R is a hydrocarbon group having a C2 to C20 linear, branched, or cyclic structure and may include a double bond, an aromatic ring, or an ether group); amides such as dimethylformamide; dioxolanes such as 1,3-dioxolane and/or 1.4-dioxolane; and/or sulfolanes.

The non-aqueous organic solvent may be used alone or in a mixture of two or more substances.

For example, if a carbonate-based solvent is used, a cyclic carbonate and a chain carbonate may be mixed and used, and the cyclic carbonate and the chain carbonate may be mixed in a volume ratio of 1:1 to 1:9.

The lithium salt may be a material that is dissolved in the non-aqueous organic solvent to serve as a supply source of lithium ions in a battery and plays a role in enabling a basic operation of a rechargeable lithium battery and in promoting the movement of lithium ions between positive and negative electrodes. The lithium salt may include, for example, at least one selected from among $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$, lithium bis(fluorosulfonyl)imide (LiFSI), $LiC_4F_9SO_3$, $LiN(C_xF_{2x+1}SO_2)(C_yF_{2y+1}SO_2)$ (e.g., where x and y are integers of 1 to 20), lithium trifluoromethane sulfonate, lithium tetrafluoroethanesulfonate, and lithium difluorobis(oxalato) phosphate (LiDFOP).

**Electrolyte**

The following description will focus on an electrolyte for a rechargeable lithium battery according to one or more embodiments of the present disclosure.

An electrolyte for a rechargeable lithium battery according to one or more embodiments of the present disclosure may include a non-aqueous organic solvent, a lithium salt, and an additive.

The non-aqueous organic solvent may be a mixed solvent of ethylene carbonate (EC), ethylmethyl carbonate (EMC), and/or dimethyl carbonate (DMC). For example, the ethylene carbonate (EC) may be included in an amount of 10 vol% to 30 vol% relative to the total volume of the non-aqueous organic solvent. The ethylmethyl carbonate (EMC) may be included in an amount of 20 vol% to 70 vol% relative to the total volume of the non-aqueous organic solvent. The dimethyl carbonate (DMC) may be included in an amount of 20 vol% to 70 vol% relative to the total volume of the non-aqueous organic solvent.

The lithium salt may include at least one selected from among $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$, lithium bis(fluorosulfonyl)imide (LiFSI), and $LiC_4F_9SO_3$. In one or more embodiments, the lithium salt may include $LiPF_6$.

The lithium salt may have a concentration of 0.1 molarity (M) to 2.0 M. For example, the lithium salt may have a concentration of equal to or greater than 0.5 *M* or equal to or greater than 1.0 M. The lithium salt may have a concentration of equal to or less than 2.0 M, equal to or less than 1.7 *M,* or equal to or less than 1.5 M. For example, the lithium salt may have a concentration of 1.5 *M.* If the lithium salt has a concentration within the preceding ranges, the electrolyte may appropriately or suitably maintain its conductivity and viscosity.

The additive according to one or more embodiments of the present disclosure may include a first compound represented by Chemical Formula 1 and a borate-based lithium salt compound.

The first compound is represented by Chemical Formula 1.

## Chemical Formula 1

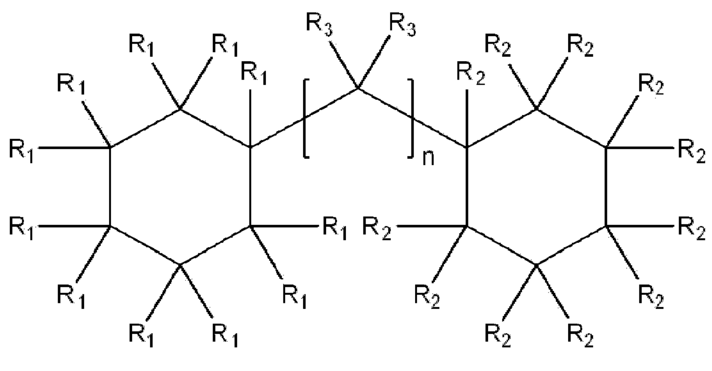

In Chemical Formula 1,

Each $R_1$ is identical or different, and is each independently hydrogen, halogen, a C1 to C10 alkyl group, or an isocyanate

group. At least one of $R_1$ may be an isocyanate group.

Each $R_2$ may be identical or different, and may each independently be hydrogen, halogen, a C1 to C10 alkyl group, or an isocyanate group, At least one of $R_2$ may be an isocyanate group.

Each $R_3$ may be identical or different, and may each independently be hydrogen or a cyclohexyl isocyanate functional group (e.g., residue).

The subscript n may be an integer of 1 to 10.

In one or more embodiments, the first compound may be represented by Chemical Formula 1-1.

## Chemical Formula 1-1

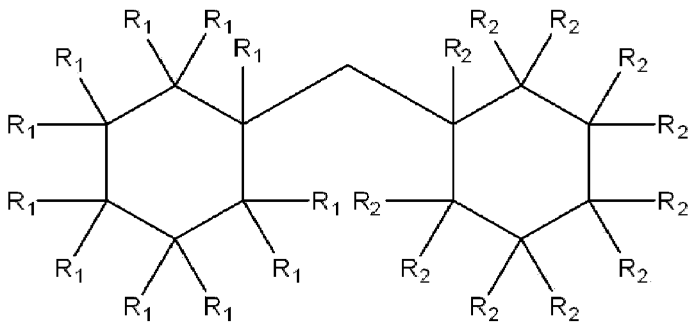

In Chemical Formula 1-1,

Each $R_1$ is identical or different, and is each independently hydrogen, halogen, a C1 to C10 alkyl group, or an isocyanate group. At least one of $R_1$ is an isocyanate group.

Each $R_2$ is identical or different, and is each independently hydrogen, halogen, a C1 to C10 alkyl group, or an isocyanate group. At least one of $R_2$ is an isocyanate group.

In one or more embodiments, the first compound may be represented by Chemical Formula 1-2.

## Chemical Formula 1-2

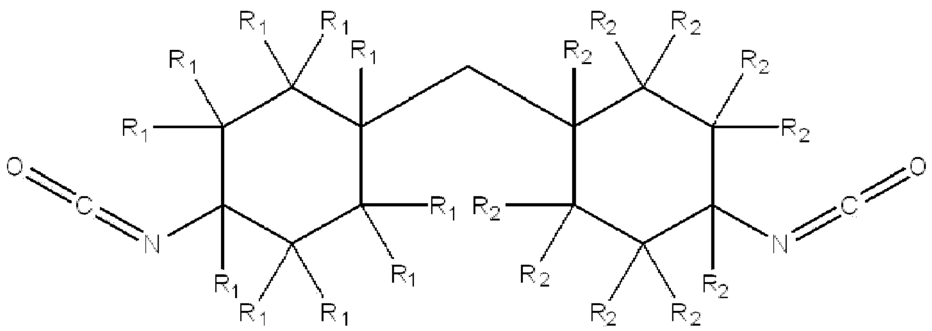

In Chemical Formula 1-2,

Each $R_1$ is identical or different, and is each independently hydrogen, halogen, or a C1 to C10 alkyl group.

Each $R_2$ is identical or different, and is each independently hydrogen, halogen, or a C1 to C10 alkyl group.

In one or more embodiments, the first compound may be represented by Chemical Formula 1-2-1.

## Chemical Formula 1-2-1

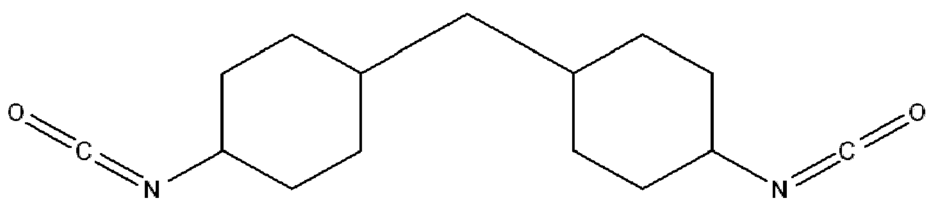

The first compound may include an alicyclic diisocyanate-based compound. The first compound may have a cyclic structure and excellent or suitable chemical resistance to stably form films on surfaces of positive and negative

electrodes. Thus, by including the first compound in the additive, it may be possible to prevent or reduce generation of lithium dendrites and to suppress or reduce side reactions of lithium metals released from the positive electrode.

Some salt products formed from lithium salt (e.g., $LiPF_6$) or a borate-based lithium salt compound, which will be discussed in more detail, may react with moisture to produce byproducts, and the byproducts may cause a swelling phenomenon or one or more suitable side reactions. The first compound may react with moisture to generate amine, and the amine may react with (e.g., any remaining) isocyanate present to form a polyurea. The polyurea may be applied or filled in on the surfaces of the positive and negative electrodes to minimize or reduce an influence of moisture and to suppress or reduce a side reaction possibly occurring on the surfaces of the positive and negative electrodes.

The first compound may be included in an amount of 0.01 wt% to 5 wt% relative to the total weight of the electrolyte. For example, the first compound may be included in an amount of equal to or greater than 0.1 wt% or equal to or greater than 0.5 wt% relative to the total weight of the electrolyte. The first compound may be included in an amount of equal to or less than 3 wt% or equal to or less than 2 wt% relative to the total weight of the electrolyte. In one or more embodiments, the first compound may be included in an amount of 0.1 wt% to 3 wt% relative to the total weight of the electrolyte.

If the amount of the first compound is less than the preceding ranges, there may be an insignificant effect of suppressing or reducing moisture in cells. If the amount of the first compound is greater than the preceding ranges, there may be a reduction in swelling improvement effect and high-temperature storage characteristics. In this sense, if the amount of the first compound falls within the preceding ranges, it may be possible to effectively suppress or reduce gas generation and battery internal resistance increase and to improve battery cycle-life characteristics.

The borate-based lithium salt compound may be represented by Chemical Formula 2.

## Chemical Formula 2

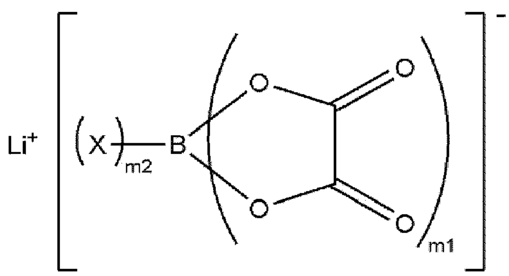

In Chemical Formula 2,

X is halogen or a C1 to C10 haloalkyl group.
m1 is 1 or 2.
If m1 is 1, m2 is 2.
If m1 is 2, m2 is 0.

According to one or more embodiments, the borate-based lithium salt compound may include at least one selected from among lithium bis(oxalato)borate (LiBOB), and lithium difluoro(oxalato)borate (LiDFOB).

The borate-based lithium salt compound may be an amphoteric lithium salt additive that aids in the replenishment and absorption of lithium at positive and negative electrodes to promote the intercalation and deintercalation of positive and negative electrode active materials, thereby improving charge/discharge characteristics of batteries.

In one or more embodiments, the borate-based lithium salt compound may be lithium bis(oxalato)borate (LiBOB).

The lithium bis(oxalato)borate (LiBOB) may be electrochemically decomposed at positive and negative electrode interfaces to form a stable borate-based (B-O) film. Therefore, a more robust film may be formed if the first compound is used together (e.g., with the second compound).

In one or more embodiments, the borate-based lithium salt compound may be lithium difluoro(oxalato)borate (LiDFOB).

Because lithium difluoro(oxalato)borate (LiDFOB) has a halogen element such as fluorine, it may be possible to form a robust film, which is composed of LiF and borate-based (B-O) organic material, on positive and negative electrodes.

The borate-based lithium salt compound (e.g., LiBOB or LiDFOB) may be included in an amount of 0.01 wt% to 5 wt% relative to the total weight of the electrolyte for a rechargeable lithium battery. For example, the borate-based lithium salt compound may be included in an amount of equal to or greater than 0.1 wt% or equal to or greater than 0.5 wt% relative

to the total weight of the electrolyte. The first compound may be included in an amount of equal to or less than 3 wt% or equal to or less than 2 wt% relative to the total weight of the electrolyte. In one or more embodiments, the borate-based lithium salt compound may be included in an amount of 0.1 wt% to 3 wt% relative to the total weight of the electrolyte for a rechargeable lithium battery.

If the amount of the borate-based lithium salt compound is less than the preceding ranges, it may be impossible to sufficiently form a film on the positive and negative electrodes. If the amount of the borate-based lithium salt compound is greater than the preceding ranges, viscosity and surface resistance of the positive and negative electrodes may be increased to lead to issues in securing cell performance such as capacity retention and cycle life. For example, if the amount of the borate-based lithium salt compound falls within the preceding ranges, a film with low surface resistance and excellent or suitable thermal stability may be formed to effectively suppress or reduce an electrolyte decomposition reaction.

According to one or more embodiments, the additive including the first compound and the borate-based lithium salt compound may be included in an amount of 0.1 wt% to 10 wt% relative to the total weight of the electrolyte for a rechargeable lithium battery. If the amount of the additive falls within the preceding range, it may be possible not only to maximize or increase effects of improving issues of battery resistance increase and gas generation, but also to prevent or reduce side reactions caused by excessive additive amount.

According to one or more embodiments, a weight ratio of the first compound and the borate-based lithium salt compound may be (e.g., included in a weight ratio of) 10:1 to 1:10. For example, the first compound and the borate-based lithium salt compound may be included in a weight ratio of 5:1 to 1:5 or 3:1 to 1:3. If the weight ratio of the first compound and the borate-based lithium salt compound falls within the preceding ranges, an oxidation film and a reduction film may be respectively formed on the positive electrode and the negative electrode, and thus it may be possible to achieve a rechargeable lithium battery with enhanced suppression of gas generation and resistance increase at high-temperature storage but also to improve cycle characteristics at room and high temperatures.

If the first compound and the borate-based lithium salt compound are used in combination, a synergy effect may occur. For example, if the additive includes the first compound and the borate-based lithium salt compound, a robust film may be formed on surfaces of the positive and negative electrodes compared to a case where each of the compounds is used alone as the additive. In conclusion, the combination of the compounds may prevent or reduce electrolyte decomposition and its resulting electrode decomposition reaction, contributing to improvement in high-temperature storage characteristics and cycle-life properties of batteries.

In summary, the electrolyte for a rechargeable lithium battery, as described, may include a non-aqueous organic solvent, a lithium salt, and an additive. The solvent is a mixture of ethylene carbonate (EC), ethylmethyl carbonate (EMC), and dimethyl carbonate (DMC), with specific volume percentages for each component to enhance performance. The lithium salt, which may include compounds like $LiPF_6$, is present in concentrations ranging from 0.1 to 2.0 molarity to maintain the electrolyte's conductivity and viscosity.

The additive includes a first compound, represented by various chemical formulas, and a borate-based lithium salt compound such as lithium bis(oxalato)borate (LiBOB) or lithium difluoro(oxalato)borate (LiDFOB). These additives help form stable films on electrode surfaces, reducing side reactions and improving battery performance. The first compound reacts with moisture to form polyurea, reducing moisture's impact and suppressing side reactions on the electrodes. It is included in amounts ranging from 0.01 wt% to 5 wt% of the total electrolyte weight, enhancing its effectiveness in reducing gas generation and improving battery cycle-life characteristics.

The borate-based lithium salt compound aids in forming a stable film on the electrodes, enhancing charge/-discharge characteristics. This compound is also included in specific weight percentages to balance film formation and maintain cell performance. When used together, the first compound and the borate-based lithium salt compound create a synergistic effect, forming robust films that prevent electrolyte decomposition and improve high-temperature storage and cycle-life properties of the battery.

Overall, this combination of solvents, lithium salts, and additives is designed to enhance the performance and longevity of rechargeable lithium batteries by maintaining optimal conductivity, reducing side reactions, and forming protective films on the electrodes.

## Rechargeable Lithium Battery

Based on a shape of a rechargeable lithium battery, the rechargeable lithium battery may be classified into cylindrical, prismatic, pouch, and coin types (kinds). FIGS. 2 to 5 illustrate simplified diagrams showing a rechargeable lithium battery according to one or more embodiments, with FIG. 2 showing a cylindrical battery, FIG. 3 showing a prismatic battery, and FIGS. 4 and 5 showing pouch-type (kind) batteries. Referring to FIGS. 2 to 4, a rechargeable lithium battery 100 may include an electrode assembly 40 in which a separator 30 is interposed between a positive electrode 10 and a negative electrode 20, and may also include a casing 50 in which the electrode assembly 40 is accommodated. The positive electrode 10, the negative electrode 20, and the separator 30 may be impregnated in an electrolyte. The

rechargeable lithium battery 100 may include a sealing member 60 that seals the casing 50 as illustrated in FIG. 2. For example, as illustrated in FIG. 3, the rechargeable lithium battery 100 may include a positive electrode lead tab 11, a positive electrode terminal 12, a negative electrode lead tab 21, and a negative electrode terminal 22. As shown in FIGS. 4 and 5, the rechargeable lithium battery 100 may include an electrode tab (e.g., at least one electrode tab) 70, or a positive electrode tab 71 and a negative electrode tab 72, which electrode tabs 70, 71 and 72 serve as an electrical path for externally inducing a current generated in the electrode assembly 40.

A rechargeable lithium battery according to one or more embodiments of the present disclosure may include a positive electrode including a positive electrode active material, a negative electrode including a negative electrode active material, and the aforementioned electrolyte for the rechargeable lithium battery.

The positive electrode active material may include a compound (e.g., lithiated intercalation compound) that reversibly intercalates and de-intercalates lithium.

For example, the positive electrode active material may include at least one kind of composite oxide including lithium and metal that is selected from among cobalt, manganese, nickel, and/or a (e.g., any suitable) combination thereof.

The positive electrode active material may include, for example, lithium cobalt oxide, lithium nickel oxide, lithium manganese oxide, lithium iron phosphate compounds, cobalt-free nickel-manganese oxide, and/or a (e.g., any suitable) combination thereof.

In one or more embodiments, the positive electrode active material may include at least one selected from among lithium iron phosphate compounds (LFP), lithium cobalt oxide (LCO), lithium nickel cobalt aluminum oxide (NCA), and lithium nickel cobalt manganese oxide (NCM).

If the electrolyte according to one or more embodiments of the present disclosure is used in combination with a positive electrode to which the positive electrode active material is applied, gas generation and battery resistance increase at high-temperature storage may be suppressed or reduced to improve battery high-temperature stability and also to enhance cycle-life characteristics at high and room temperatures.

The negative electrode active material may be a carbon-based negative electrode active material, a Si-based negative electrode active material, a Sn-based negative electrode active material, and/or a (e.g., any suitable) combination thereof. In one or more embodiments, the negative electrode active material may be a Si-based negative electrode active material.

The Si-based negative electrode active material may include a core including silicon-based particles and a coating layer including amorphous carbon. The silicon-based particles may include one or more of a silicon-carbon composite, $SiO_x$ ($0<x\leq2$), and a silicon alloy.

The rechargeable lithium battery according to one or more embodiments of the present disclosure may be applied to automotive vehicles, mobile phones, and/or any other electrical devices, but the present disclosure is not limited thereto.

Numerical ranges disclosed herein include and are intended to disclose all subsumed sub-ranges of the same numerical precision. For example, a range of "1.0 to 10.0" includes all subranges having a minimum value equal to or greater than 1.0 and a maximum value equal to or less than 10.0, such as, for example, 2.4 to 7.6. Applicant therefore reserves the right to amend this specification, including the claims, to expressly recite any sub-range subsumed within the ranges expressly recited herein.

The following will describe one or more example embodiments and comparative examples of the present disclosure. The following embodiments, however, are merely examples, and the present disclosure is not limited to one or more embodiments discussed.

## EXAMPLES

### Example Embodiments and Comparative Examples

An electrolyte and a rechargeable lithium battery were fabricated by the following methods.

### Example Embodiment 1

#### (1) Preparation of Electrolyte

A mixture of 1.5 molarity (*M*) $LiPF_6$ was dissolved in a non-aqueous organic solvent containing ethylene carbonate (EC), ethylmethyl carbonate (EMC), and dimethyl carbonate (DMC) mixed in a volume ratio of 20:40:40, and an additive was added to prepare an electrolyte.

As the additive, a compound represented by Chemical Formula 1A was mixed in an amount of 0.5 wt% relative to the total weight of the electrolyte, and a compound represented by Chemical Formula 2A was mixed in an amount of 0.5 wt% relative to the total weight of the electrolyte.

## Chemical Formula 1A

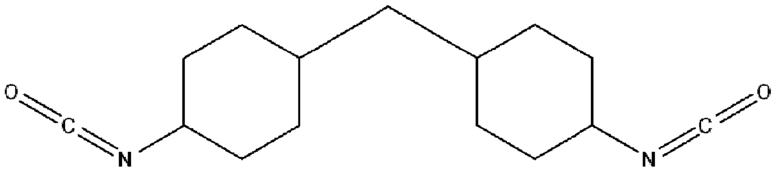

## Chemical Formula 2A

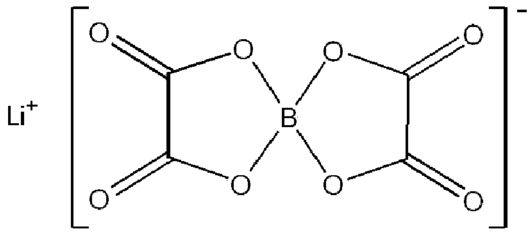

### (2) Fabrication of Rechargeable Lithium Battery

$LiFePO_4$ as a positive electrode active material, polyvinylidene fluoride as a binder, and Ketjen black as a conductive material were mixed in a weight ratio of 97:2:1, and the mixture was dispersed in N-methyl pyrrolidone to prepare a positive electrode active material slurry.

The positive electrode active material slurry was coated on an Al foil of 14 micrometer (μm) in thickness, dried at 110°C, and then pressed to manufacture a positive electrode.

Artificial graphite and a silicon-carbon composite mixed in a weight ratio of 93:7 as a negative electrode active material, styrene-butadiene rubber as a binder, and carboxymethyl cellulose as a thickener were mixed in a weight ratio of 97:1:2, and the mixture was dispersed in distilled water to prepare a negative electrode active material slurry.

The silicon-carbon composite included a core including artificial graphite and silicon particles, and a coal-based pitch coated on a surface of the core.

The negative electrode active material slurry was coated on a Cu foil of 10 μm in thickness, dried at 100°C, and then pressed to manufacture a negative electrode.

The positive electrode, the negative electrode, and a polyethylene separator of 25 μm in thickness were assembled to manufacture an electrode assembly, and the electrolyte was introduced to fabricate a rechargeable lithium battery as a prismatic cell type (kind) of 10 millimeter (mm) in thickness.

Again, in Example Embodiment 1, an electrolyte is prepared by dissolving 1.5 M $LiPF_6$ in a non-aqueous organic solvent mixture of ethylene carbonate (EC), ethylmethyl carbonate (EMC), and dimethyl carbonate (DMC) in a 20:40:40 volume ratio, with additives from Chemical Formulas 1A and 2A each at 0.5 wt%. For the rechargeable lithium battery, the positive electrode is made from $LiFePO_4$, polyvinylidene fluoride, and Ketjen black in a 97:2:1 weight ratio, coated on 14 μm Al foil, while the negative electrode uses artificial graphite and a silicon-carbon composite in a 93:7 weight ratio, coated on 10 μm Cu foil. These electrodes, along with a 25 μm polyethylene separator, are assembled, and the electrolyte is introduced to create a prismatic cell type battery of 10 mm thickness.

### Example Embodiment 2

An electrolyte and a rechargeable lithium battery were each fabricated in independently substantially the same method as that in Example Embodiment 1, except that 0.5 wt% of a compound represented by Chemical Formula 2B was added in place of the additive represented by Chemical Formula 2A when the electrolyte was prepared.

## Chemical Formula 2B

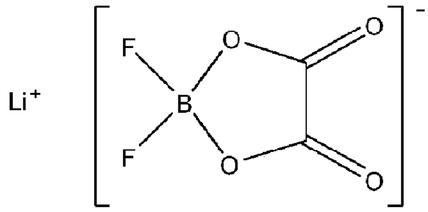

### Example Embodiment 3

An electrolyte and a rechargeable lithium battery were each fabricated in independently substantially the same method as that in Example Embodiment 1, except that $LiNi_{0.91}Co_{0.07}Al_{0.02}O_2$ was used as the positive electrode active material.

### Example Embodiment 4

An electrolyte and a rechargeable lithium battery were each fabricated in independently substantially the same method as that in Example Embodiment 1, except that $LiCoO_2$ was used as the positive electrode active material.

### Example Embodiment 5

An electrolyte and a rechargeable lithium battery were each fabricated in independently substantially the same method as that in Example Embodiment 1, except that $LiNi_{0.88}Co_{0.08}Mn_{0.04}O_2$ was used as the positive electrode active material.

### Comparative Example 1

An electrolyte and a rechargeable lithium battery were each fabricated in independently substantially the same method as that in Example Embodiment 1, except that no additive was added.

### Comparative Example 2

An electrolyte and a rechargeable lithium battery were each fabricated in independently substantially the same method as that in Example Embodiment 1, except that the compound represented by Chemical Formula 2A was not added as the additive when the electrolyte was prepared.

### Comparative Example 3

An electrolyte and a rechargeable lithium battery were each fabricated in independently substantially the same method as that in Example Embodiment 1, except that the compound represented by Chemical Formula 1A was not added as the additive when the electrolyte was prepared.

### Comparative Example 4

An electrolyte and a rechargeable lithium battery were each fabricated in independently substantially the same method as that in Example Embodiment 2, except that the compound represented by Chemical Formula 1A was not added as the additive when the electrolyte was prepared.

### Comparative Example 5

An electrolyte and a rechargeable lithium battery were each fabricated in independently substantially the same method as that in Example Embodiment 1, except that 0.5 wt% of a compound represented by Chemical Formula 2C was added in place of the additive represented by Chemical Formula 2A when the electrolyte was prepared.

## Chemical Formula 2C

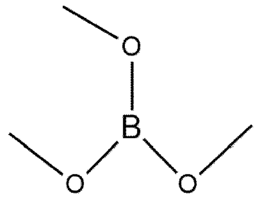

### Comparative Example 6

An electrolyte and a rechargeable lithium battery were each fabricated in independently substantially the same method as that in Embodiment 3, except that no additive was added.

### Comparative Example 7

An electrolyte and a rechargeable lithium battery were each fabricated in independently substantially the same method as that in Example Embodiment 4, except that no additive was added.

### Comparative Example 8

An electrolyte and a rechargeable lithium battery were each fabricated in independently substantially the same method as that in Example Embodiment 5, except that no additive was added.

### Evaluation 1: High-temperature Storage Characteristics (DC-IR Increase Rate and Capacity Retention Rate)

Each of the rechargeable lithium batteries according to the example embodiments and the comparative examples was charged and discharged at 0.33 coulomb (C) one time to measure a charge/discharge capacity (initial capacity).

Each of the rechargeable lithium batteries fabricated according to the example embodiments and the comparative examples was charged to 100% state of charge (SOC) (i.e., a 100% charged state when the total charge capacity is set to 100%), stored at 60 °C for 60 days, and then discharged with a constant current of 0.33 C until 2.5 volt (V) was reached to measure an initial discharge capacity.

A discharge capacity ratio after high-temperature storage relative to the initial capacity is shown as a retention capacity rate in Table 1.

For each of the rechargeable lithium batteries according to the example embodiments and the comparative examples, after initial direct-current internal resistance (DC-IR) was measured as $\Delta V/\Delta I$ (voltage change/current change), the battery was allowed to charge its maximum energy state into a full charge state (SOC 100%) and stored in the charged state at a high temperature (60 °C) for 60 days, and then direct-current internal resistance was measured.

A DC-IR increase rate (%) was calculated according to the following Equation 1, and the result is listed in Table 1 where "EE" stands for example embodiment, "CE" stands for comparative example, and "mΩ" is milliohm.

## Equation 1

$$\text{DC-IR increase rate (\%)} = (\text{DC-IR after high-temperature storage / initial DC-IR}) \times 100$$

Table 1

| | Initial DC-IR (mΩ) | DC-IR after high-temperature storage (mΩ) | DC-IR increase rate (%) | Capacity retention rate (%) |
|---|---|---|---|---|
| EE 1 | 15.49 | 19.94 | 128.7 | 92.8 |
| EE 2 | 15.52 | 20.02 | 129 | 92.6 |

(continued)

| | Initial DC-IR (mΩ) | DC-IR after high-temperature storage (mΩ) | DC-IR increase rate (%) | Capacity retention rate (%) |
|---|---|---|---|---|
| EE 3 | 15.16 | 19.10 | 126.0 | 92.2 |
| EE 4 | 14.98 | 19.22 | 128.3 | 93.4 |
| EE 5 | 15.22 | 19.41 | 127.5 | 92.7 |
| CE 1 | 14.68 | 21.65 | 147.5 | 86.4 |
| CE 2 | 15.18 | 20.45 | 134.7 | 89.5 |
| CE 3 | 15.10 | 20.14 | 133.4 | 89.8 |
| CE 4 | 15.15 | 20.18 | 133.2 | 89.7 |
| CE 5 | 15.15 | 20.6 | 136 | 88.9 |
| CE 6 | 14.59 | 21.30 | 146.0 | 87.6 |
| CE 7 | 14.52 | 20.24 | 139.4 | 88.1 |
| CE 8 | 14.63 | 20.95 | 143.2 | 87.1 |

**Evaluation 2: Cycle-Life Characteristics**

Each of the rechargeable lithium batteries fabricated according to the examples and the comparative examples was charged at a high temperature (45 °C) under the condition of CC-CV, 0.5 C, 3.7 V (for LFP) or 4.2 V (for NCA, LCO, and NCM), and 0.05 C cut-off, and then discharged under the condition of CC, 1 C, and 2.5 V cut-off, which one cycle was repeated 400 times to measure a discharge capacity change. A ratio of the discharge capacity after 400 cycles to the discharge capacity after 1 cycle is shown as a capacity retention rate in Table 2.

For example, each of the rechargeable lithium batteries fabricated according to the examples and the comparative examples was charged at room temperature (25 °C) under the condition of CC-CV, 0.5 C, 3.7 V (for lithium iron phosphate (LFP)) or 4.2 V (for lithium nickel cobalt aluminum oxide (NCA), lithium cobalt oxide (LCO), and lithium nickel cobalt manganese oxide (NCM)), and 0.05 C cut-off, and then discharged under the condition of CC, 1 C, and 2.5 V cut-off, which one cycle was repeated 400 times to measure a discharge capacity change. A ratio of the discharge capacity after 400 cycles to the discharge capacity after 1 cycle is shown as a capacity retention rate in Table 2, where "EE" stands for example embodiment and "CE" stands for comparative example.

Table 2

| | 45 °C, 400 cycles | 25 °C, 400 cycles |
|---|---|---|
| | Capacity retention rate (%) | Capacity retention rate (%) |
| EE 1 | 90.12 | 94.6 |
| EE 2 | 89.85 | 94.4 |
| EE 3 | 90.05 | 93.7 |
| EE 4 | 91.86 | 94.5 |
| EE 5 | 89.84 | 94.1 |
| CE 1 | 85.15 | 89.2 |
| CE 2 | 86.86 | 91.3 |
| CE 3 | 86.9 | 91.5 |
| CE 4 | 87.02 | 91.6 |
| CE 5 | 86.73 | 91.3 |
| CE 6 | 84.8 | 88.9 |
| CE 7 | 86.0 | 90.7 |
| CE 8 | 85.1 | 91.2 |

**Evaluation 3: High-temperature Gas Generation**

Each of the rechargeable lithium batteries fabricated according to the examples and the comparative examples was stored at 60 °C for 30 days, and then refinery gas analysis (RGA) was utilized to measure a gas generation amount (mL). The results are listed in Table 3, where "EE" stands for example embodiment.

Table 3

| | 60 °C, 30 days |
|---|---|
| | Gas generation amount (mL) |
| EE 1 | 10.25 |
| EE 2 | 10.11 |
| EE 3 | 10.34 |
| EE 4 | 10.06 |
| EE 5 | 10.40 |
| CE 1 | 12.36 |
| CE 2 | 11.48 |
| CE 3 | 11.30 |
| CE 4 | 11.43 |
| CE 5 | 11.52 |
| CE 6 | 12.84 |
| CE 7 | 11.95 |
| CE 8 | 12.52 |

Referring to Table 1, it may be observed that, compared to the rechargeable lithium batteries according to the comparative examples, the rechargeable lithium batteries according to the example embodiments have increased capacity retention rates after high-temperature storage and reduced DC-IR increase rates. Thus, it may be ascertained that there is an improvement in battery high-temperature characteristics and internal resistance suppression effects.

Referring to Table 2, it may be observed that, compared to the rechargeable lithium batteries according to the comparative examples, the rechargeable lithium batteries according to the example embodiments had excellent or suitable capacity retention rates at both (e.g., simultaneously) high and room temperatures. It may be ascertained that, as the first compound and the borate-based lithium salt compound are included according to one or more embodiments of the present disclosure, charge/discharge cycle characteristics are improved.

Referring to Table 3, it may be observed that, compared to the rechargeable lithium batteries according to the comparative examples, the rechargeable lithium batteries according to the example embodiments have less amounts of gas generation after high-temperature storage. For example, it may be ascertained that, when the first compound and the borate-based lithium salt compound are used in combination, gas generation is suppressed or reduced to improve a swelling phenomenon.

Differently from Comparative Example 5 where the first compound and trimethyl borate (TMB), a substitute for the borate-based lithium salt compound, are used as the additive, the rechargeable lithium battery according to the examples of the present disclosure may include an oxalate functional group to form a robust film. Therefore, it may be ascertained that there is an improvement in battery charge/discharge cycle characteristics, battery internal resistance increase, and gas generation reduction.

For example, it may be ascertained that, when the electrolyte according to the example embodiments of the present disclosure is used in combination with the positive electrode to which one or more of lithium iron phosphate compounds (LFP), lithium cobalt oxide (LCO), lithium nickel cobalt aluminum oxide (NCA), and lithium nickel cobalt manganese oxide (NCM) are applied as the positive electrode active material, the rechargeable lithium battery has excellent or suitable high-storage storage characteristics and superior charge/discharge cycle properties at high and room temperatures. Again, when the electrolyte from the example embodiments is used with positive electrodes containing lithium iron phosphate (LFP), lithium cobalt oxide (LCO), lithium nickel cobalt aluminum oxide (NCA), or lithium nickel cobalt manganese oxide (NCM), the resulting rechargeable lithium batteries exhibit excellent high-temperature storage characteristics and superior charge/discharge cycle properties at both high and room temperatures.

According to one or more embodiments of the present disclosure, it may be possible to achieve a rechargeable lithium battery with excellent or suitable cycle-life characteristics and improved battery stability caused by suppression of gas generation and battery resistance increase at high-temperature storage. For example, these rechargeable lithium batteries achieve excellent cycle-life characteristics and improved stability by effectively suppressing gas generation and minimizing resistance increase during high-temperature storage.

## Claims

1. An electrolyte for a rechargeable lithium battery (100) comprising:

   a non-aqueous organic solvent;
   a lithium salt; and
   an additive,
   wherein the additive comprises:

   a first compound represented by Chemical Formula 1; and
   a borate-based lithium salt compound,

   **Chemical Formula 1**

   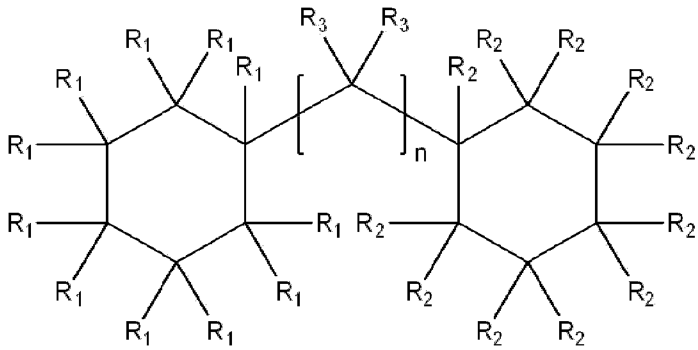

   ,

   wherein, in Chemical Formula 1,
   $R_1$ are each independently identical or different and are each independently hydrogen, halogen, a C1 to C10 alkyl group, or an isocyanate group, wherein at least one $R_1$ is an isocyanate group,
   $R_2$ are each independently identical or different and are each independently hydrogen, halogen, a C1 to C10 alkyl group, or an isocyanate group, wherein at least one $R_2$ is an isocyanate group,
   $R_3$ are each independently identical or different and are each independently hydrogen or a cyclohexyl isocyanate residue, and
   n is an integer of 1 to 10.

2. The electrolyte as claimed in claim 1, wherein the first compound is represented by Chemical Formula 1-1,

   **Chemical Formula 1-1**

   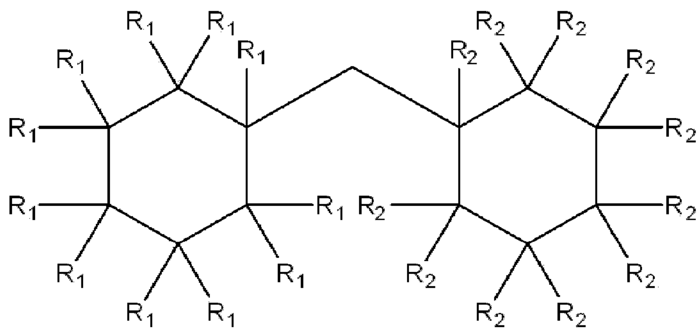

   ,

wherein, in Chemical Formula 1-1,

$R_1$ are each independently identical or different and are each independently hydrogen, halogen, a C1 to C10 alkyl group, or an isocyanate group, wherein at least one $R_1$ is an isocyanate group, and
$R_2$ are each independently identical or different and are each independently hydrogen, halogen, a C1 to C10 alkyl group, or an isocyanate group, wherein at least one $R_2$ is an isocyanate group.

**3.** The electrolyte as claimed in claim 1, wherein the first compound is represented by Chemical Formula 1-2,

**Chemical Formula 1-2**

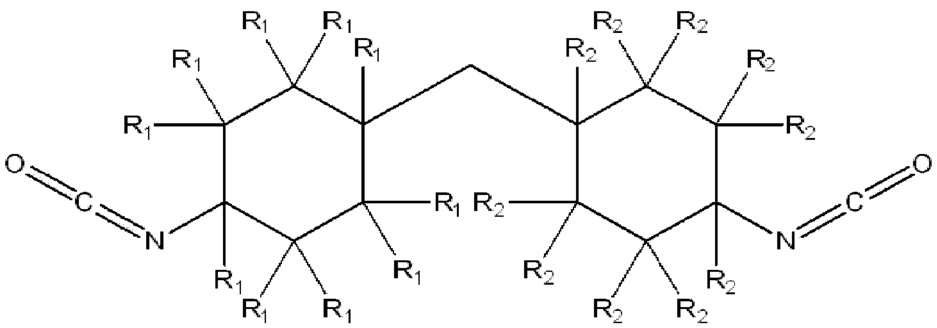

wherein, in Chemical Formula 1-2,

$R_1$ are each independently identical or different and are each independently hydrogen, halogen, or a C1 to C10 alkyl group, and
$R_2$ are each independently identical or different and are each independently hydrogen, halogen, or a C1 to C10 alkyl group.

**4.** The electrolyte as claimed in any one of the preceding claims, wherein the borate-based lithium salt compound is represented by Chemical Formula 2,

**Chemical Formula 2**

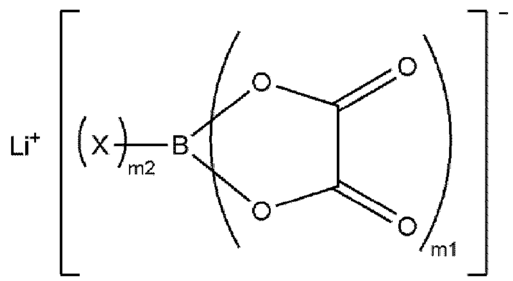

,

and wherein, in Chemical Formula 2,

X is halogen or a C1 to C10 haloalkyl group,
m1 is 1 or 2,
when m1 is 1, m2 is 2, and
when m1 is 2, m2 is 0.

**5.** The electrolyte as claimed in claim 4, wherein the borate-based lithium salt compound comprises at least one selected from among lithium bis(oxalato)borate (LiBOB) and lithium difluoro(oxalato)borate (LiDFOB).

**6.** The electrolyte as claimed in any one of the preceding claims, wherein the first compound is in an amount of 0.01 wt% to 5 wt% relative to a total weight of the electrolyte, in particular in an amount of 0.1 wt% to 3 wt% relative to a total

weight of the electrolyte.

**7.** The electrolyte as claimed in any one of the preceding claims, wherein the borate-based lithium salt compound is in an amount of 0.01 wt% to 5 wt% relative to a total weight of the electrolyte, in particular in an amount of 0.1 wt% to 3 wt% relative to a total weight of the electrolyte.

**8.** The electrolyte as claimed in any one of the preceding claims, wherein the additive is in an amount of 0.1 wt% to 10 wt% relative to a total weight of the electrolyte.

**9.** The electrolyte as claimed in any one of the preceding claims, wherein a weight ratio of the first compound and the borate-based lithium salt compound is 10:1 to 1:10.

**10.** The electrolyte as claimed in any one of the preceding claims, wherein the non-aqueous organic solvent comprises a carbonate-based solvent.

**11.** The electrolyte as claimed in claim 10, wherein the carbonate-based solvent comprises ethylene carbonate (EC), ethylmethyl carbonate (EMC), and dimethyl carbonate (DMC).

**12.** The electrolyte as claimed in any one of the preceding claims, wherein the lithium salt comprises $LiPF_6$.

**13.** The electrolyte as claimed in any one of the preceding claims, wherein a concentration of the lithium salt is 0.1 molarity (M) to 2.0 *M.*

**14.** A rechargeable lithium battery (100), comprising:

a positive electrode (10) that comprises a positive electrode active material;
a negative electrode (20) that comprises a negative electrode active material; and
the electrolyte as claimed in claim 1.

**15.** The rechargeable lithium battery as claimed in claim 14, wherein the positive electrode active material comprises lithium-nickel-based oxide, lithium-cobalt-based oxide, lithium-manganese-based oxide, lithium-iron-phosphate-based compounds, cobalt-free nickel-manganese-based oxide, or a combination thereof.

FIG. 1

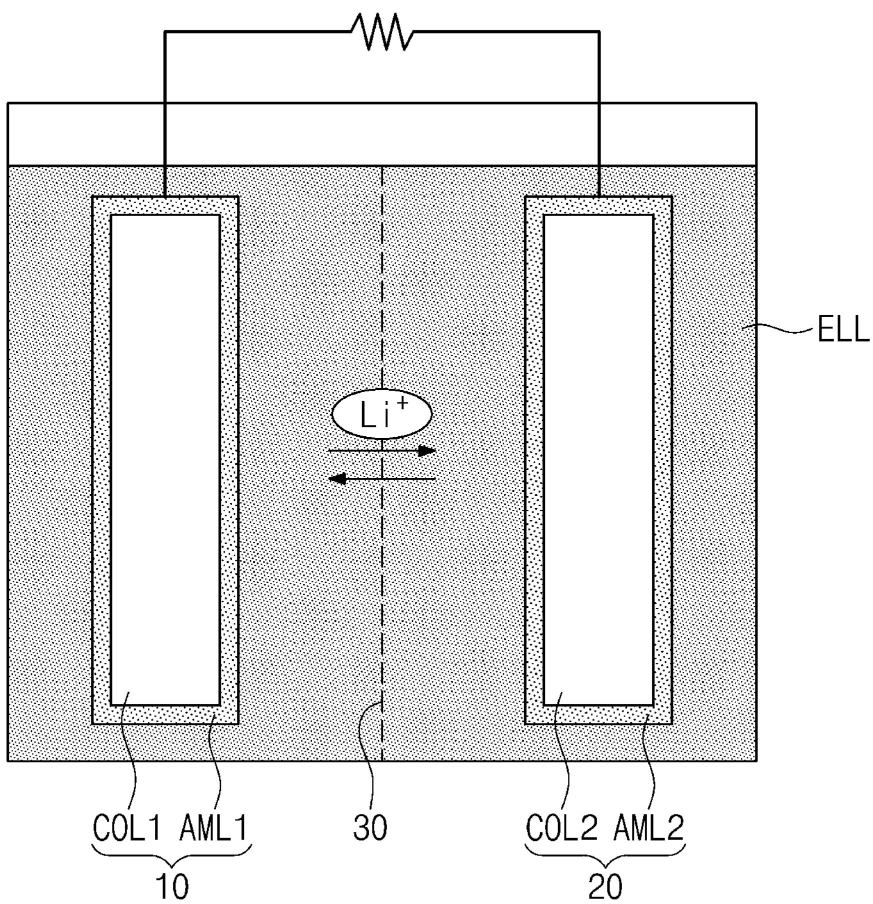

FIG. 2

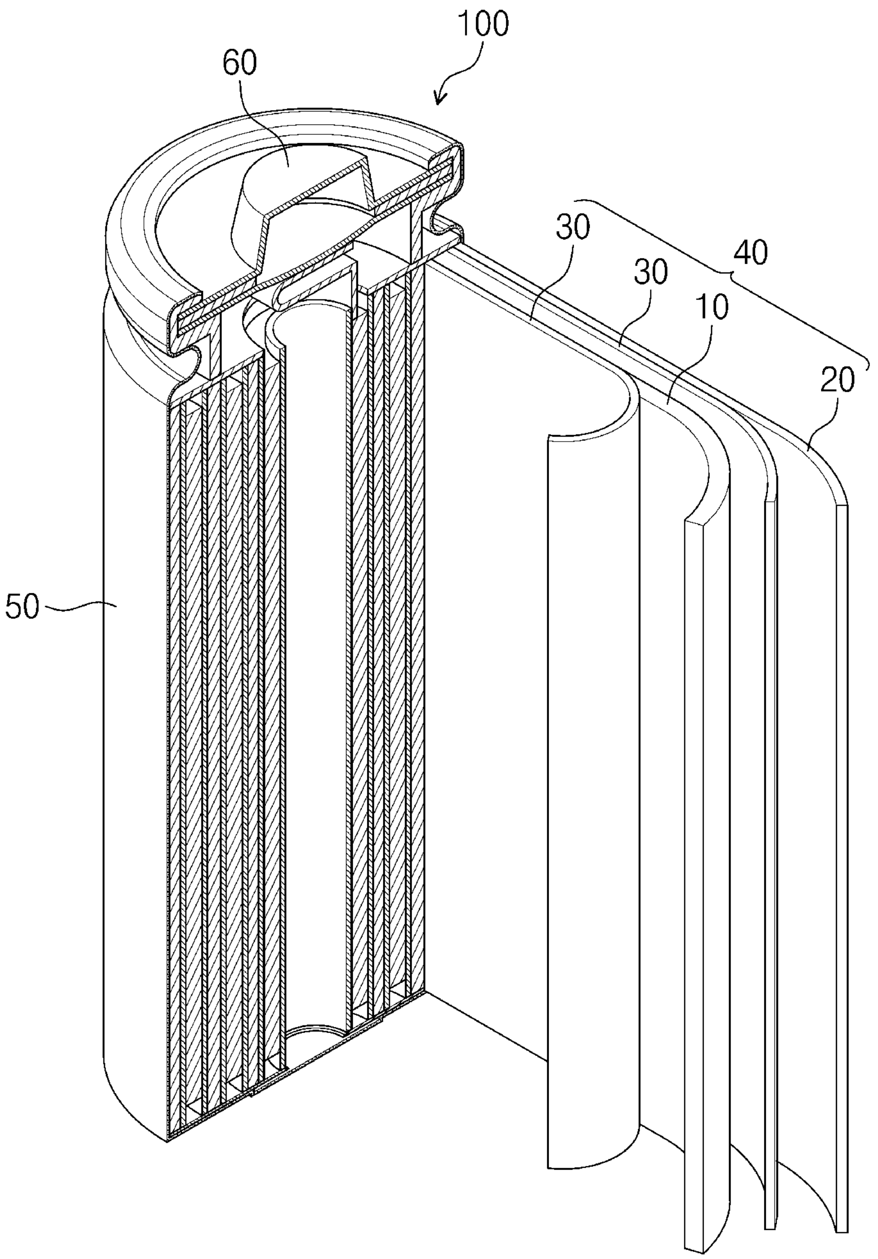

FIG. 3

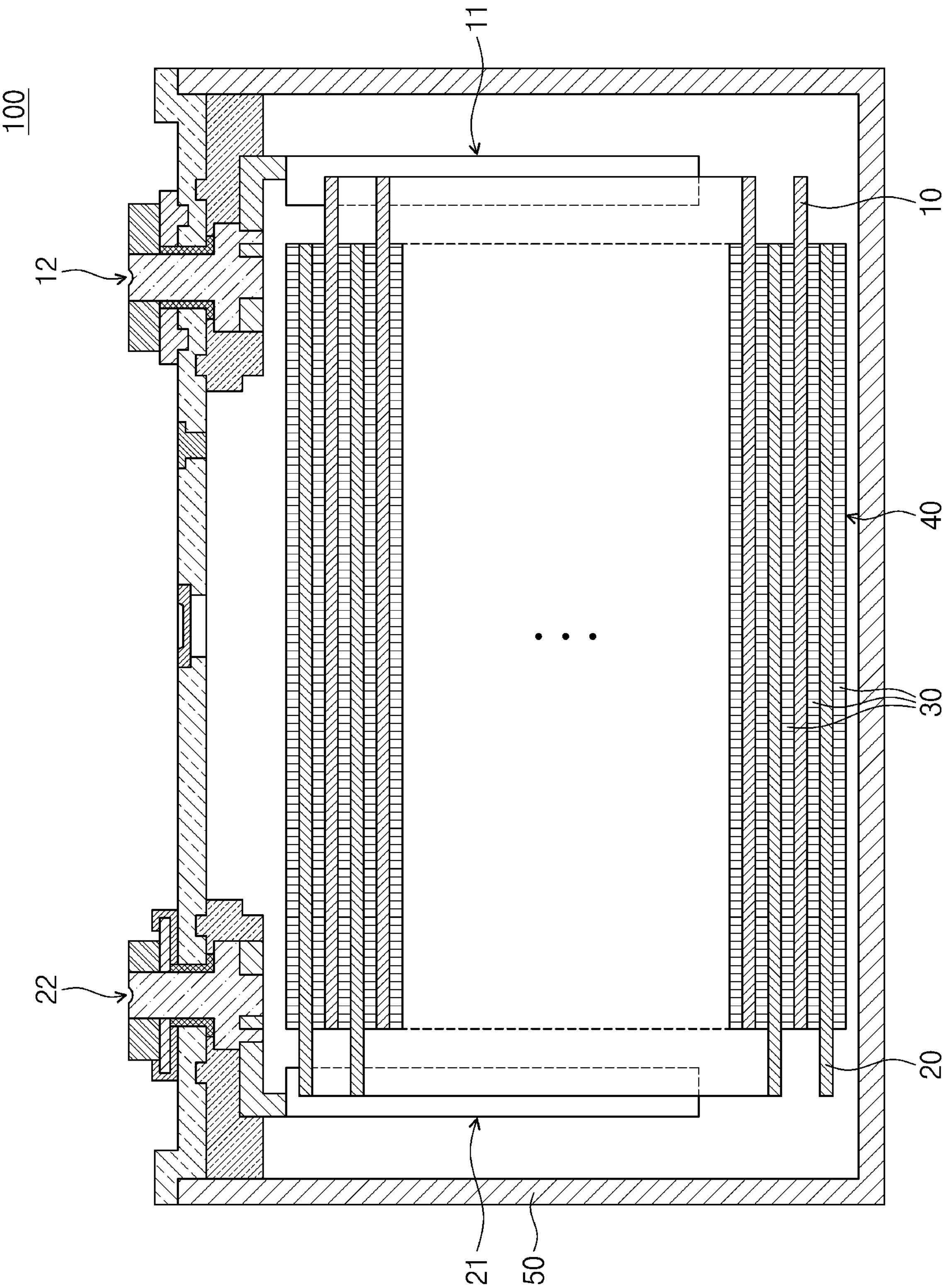

FIG. 4

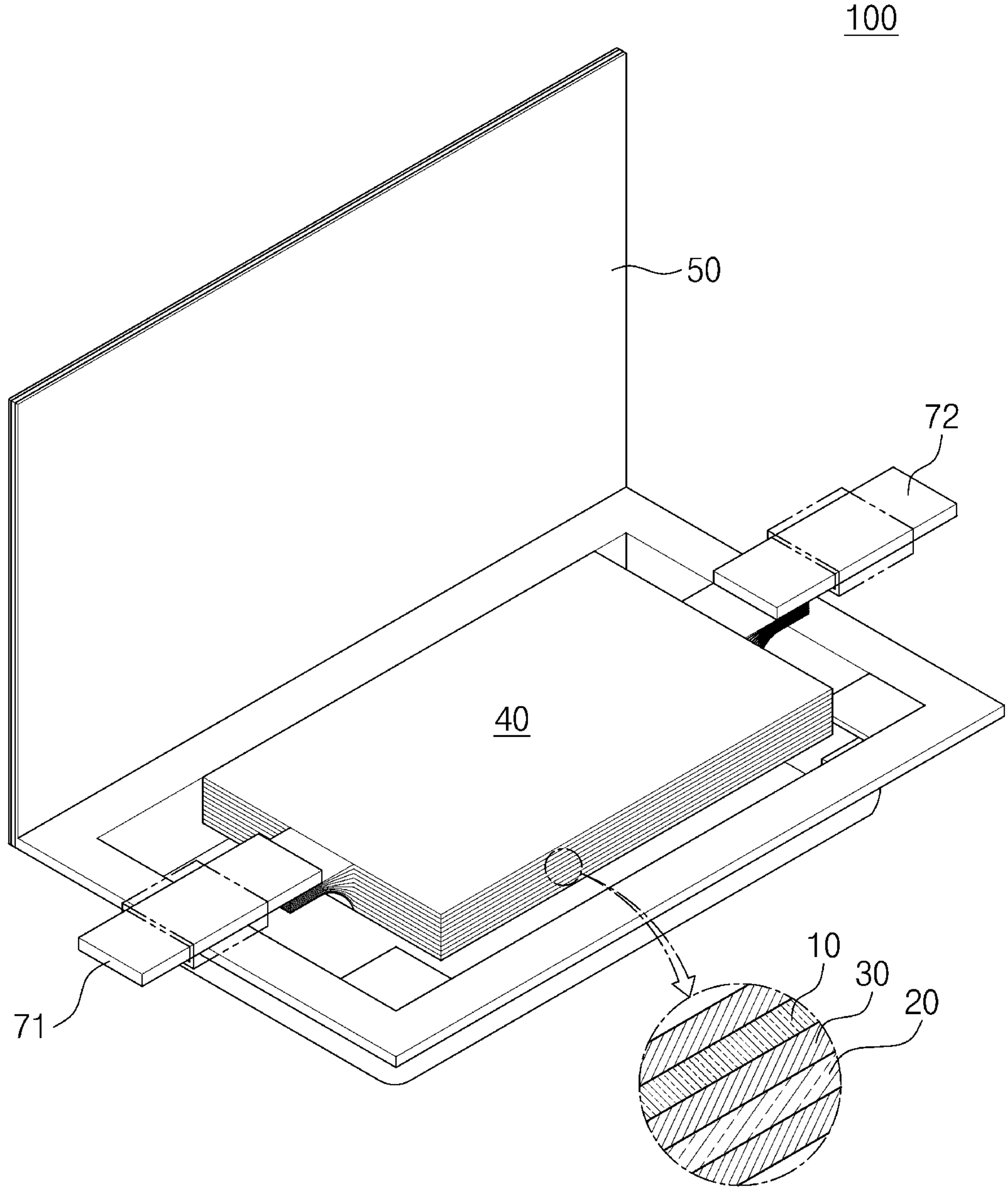

FIG. 5

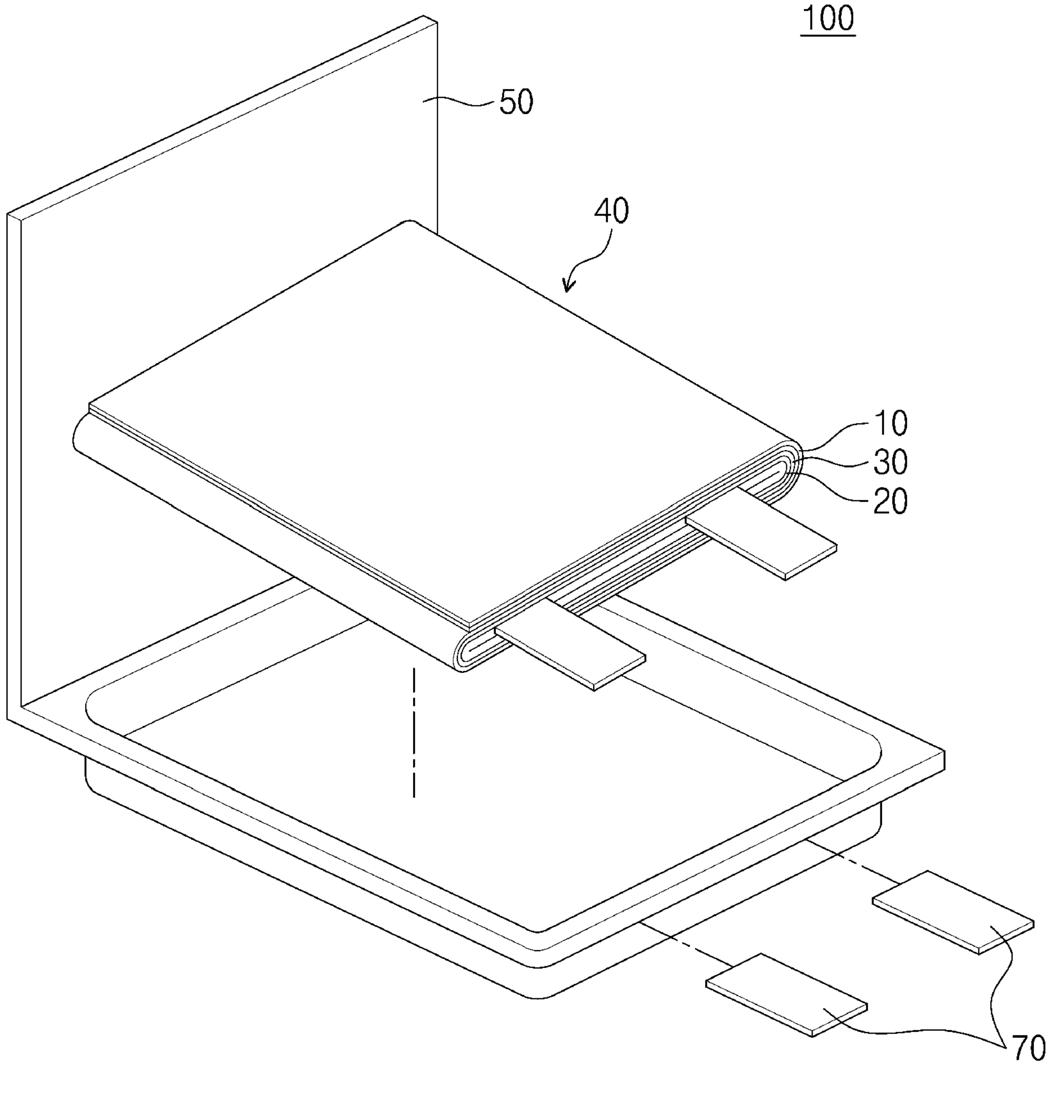

Europäisches Patentamt
European Patent Office
Office européen des brevets

# EUROPEAN SEARCH REPORT

Application Number
EP 25 18 8047

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2021 015812 A (MITSUBISHI CHEM CORP; MU IONIC SOLUTIONS CORP) 12 February 2021 (2021-02-12)<br>* claims 1,3,5,7;- *<br>* paragraph [0012] *<br>* paragraph [0292] *<br>* paragraph [0313] *<br>----- | 1-15 | INV.<br>H01M4/52<br>H01M10/052<br>H01M10/0525<br>H01M10/0567<br>H01M10/0568<br>H01M10/0569 |
| X | EP 2 685 540 A1 (MITSUBISHI CHEM CORP [JP]) 15 January 2014 (2014-01-15)<br>* paragraph [0020] *<br>* paragraph [0094] - paragraph [0096] *<br>* paragraph [0128] *<br>* examples 8-1 *<br>* examples 9-1 *<br>----- | 1-15 | |

TECHNICAL FIELDS SEARCHED (IPC)

H01M

The present search report has been drawn up for all claims

1

| Place of search | Date of completion of the search | Examiner |
|---|---|---|
| Munich | 20 November 2025 | Nikolai, Joachim |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

EPO FORM 1503 03.82 (P04C01)

# ANNEX TO THE EUROPEAN SEARCH REPORT ON EUROPEAN PATENT APPLICATION NO. EP 25 18 8047

This annex lists the patent family members relating to the patent documents cited in the above-mentioned European search report. The members are as contained in the European Patent Office EDP file on
The European Patent Office is in no way liable for these particulars which are merely given for the purpose of information.

20-11-2025

| Patent document cited in search report | Publication date | Patent family member(s) | Publication date |
|---|---|---|---|
| JP 2021015812 A | 12-02-2021 | JP 2015195203 A | 05-11-2015 |
| | | JP 2021015812 A | 12-02-2021 |
| EP 2685540 A1 | 15-01-2014 | CN 103380530 A | 30-10-2013 |
| | | CN 103762381 A | 30-04-2014 |
| | | CN 105576244 A | 11-05-2016 |
| | | CN 105576282 A | 11-05-2016 |
| | | CN 110010968 A | 12-07-2019 |
| | | CN 116525945 A | 01-08-2023 |
| | | EP 2685540 A1 | 15-01-2014 |
| | | EP 3758124 A1 | 30-12-2020 |
| | | KR 20140036156 A | 25-03-2014 |
| | | KR 20140040285 A | 02-04-2014 |
| | | KR 20140093976 A | 29-07-2014 |
| | | PL 2685540 T3 | 13-09-2021 |
| | | US 2013330609 A1 | 12-12-2013 |
| | | US 2016164143 A1 | 09-06-2016 |
| | | US 2020036042 A1 | 30-01-2020 |
| | | US 2022069351 A1 | 03-03-2022 |
| | | US 2023395857 A1 | 07-12-2023 |
| | | US 2025233206 A1 | 17-07-2025 |
| | | WO 2012108270 A1 | 16-08-2012 |

EPO FORM P0459

For more details about this annex : see Official Journal of the European Patent Office, No. 12/82